# FASCICULE DE BREVET EUROPEEN

(11) **EP 2 260 184 B1**
(45) Date de publication et mention de la délivrance du brevet: **25.07.2012**
(21) Numéro de dépôt: 09727893.1
(22) Date de dépôt: 11.03.2009
(51) Int. Cl.: F01D 25/18, B01D 45/14, F02C 7/06

(54) **DESHUILEUR CENTRIFUGE A SECTION DE PASSAGE VARIABLE**
ZENTRIFUGALÖLABSCHEIDER MIT VARIABLEM KANALABSCHNITT
CENTRIFUGAL OIL SEPARATOR HAVING VARIABLE CHANNEL SECTION

(30) Priorité: 12.03.2008 FR 0851608
(43) Date de publication de la demande: 15.12.2010
(73) Titulaire: Snecma, 75015 Paris (FR)
(72) Inventeur: MORREALE, Serge, René, F-77390 Guignes (FR)
(74) Mandataire: Boura, Olivier
(86) Numéro de dépôt international: PCT/FR2009/050400
(87) Numéro de publication internationale: WO 2009/122057

(56) Documents cités:
- EP-A- 1 582 703
- FR-A- 2 622 469
- GB-A- 2 111 607
- US-A- 6 033 450

## Description

### Arrière-plan de l'invention

La présente invention se rapporte au domaine général des dispositifs permettant de séparer l'air de l'huile d'un mélange air/huile. Un domaine particulier d'application de l'invention est celui des moteurs d'avion à turbine à gaz (turboréacteurs et turbopropulseurs).

Les moteurs d'avion à turbine à gaz comportent des enceintes contenant des roulements et des engrenages qui sont lubrifiés et refroidis par de l'huile. Afin d'éviter les fuites d'huile vers l'extérieur de ces enceintes, des joints sont disposés entre les parties tournantes et les parties fixes des enceintes, voire entre les parties tournantes elles-mêmes. Parmi les technologies de joints disponibles, ceux offrant la plus grande durée de vie sont les joints labyrinthes et les joints à brosse, le contact entre les pièces étant inexistant dans le premier cas et très limité dans le second.

Pour assurer une parfaite étanchéité d'enceintes munies de joints labyrinthes ou de joints à brosse, il est en revanche nécessaire de faire passer un débit d'air par les joints, ce débit d'air étant généralement prélevé sur un étage du compresseur du moteur. Le recours à un tel procédé implique de prévoir également des dispositifs séparant l'huile de l'air à évacuer à l'extérieur du moteur. De tels dispositifs - communément appelés déshuileurs - sont bien connus en soi. On pourra par exemple se référer aux documents EP 1582703, US 4,981,502 et US 6,033,450 qui décrivent différents types de déshuileurs centrifuges.

L'utilisation d'un débit d'air pour assurer l'étanchéité des enceintes d'un moteur pose toutefois un problème d'optimisation de ce débit. On comprend aisément que plus le débit d'air traversant les joints est important, plus les enceintes sont étanches. La contrepartie à un débit d'air important est que la quantité d'huile dans l'air évacué à l'extérieur du moteur est élevée, ce qui implique une consommation d'huile importante. Par ailleurs, le débit d'air qui est prélevé sur un étage du compresseur est fonction du régime de fonctionnement du moteur, de sorte que le débit d'air minimal nécessaire pour assurer l'étanchéité des enceintes est calculé sur la base de la phase de ralenti du moteur (cette phase correspond au régime de fonctionnement du moteur au cours duquel le débit d'air prélevé est le plus faible). Aussi, lors des autres phases de fonctionnement du moteur, et notamment à plein régime, le débit d'air traversant les joints des enceintes est surabondant par rapport à ce qui est suffisant pour assurer l'étanchéité des enceintes, ce qui engendre une surconsommation d'huile avec tous les effets néfastes que cela comporte (pollution, surcoût, etc.).

### Objet et résumé de l'invention

La présente invention vise à remédier aux inconvénients précités en proposant un déshuileur capable d'assurer une parfaite étanchéité des enceintes air/huile quelles que soient les phases de fonctionnement du moteur tout en garantissant la plus faible consommation d'huile possible.

Ce but est atteint grâce à un déshuileur centrifuge à section variable selon la revendication 1, comportant un arbre cylindrique creux mobile en rotation autour de son axe de révolution, l'arbre ayant au moins un orifice de passage de l'air débouchant dans une enceinte air/huile et s'ouvrant à l'intérieur de l'arbre, et un piston logé dans l'arbre de façon à diviser l'intérieur de l'arbre en deux compartiments étanches l'un par rapport à l'autre, le compartiment pourvu du ou des orifices de passage de l'air étant soumis à une pression ambiante et l'autre compartiment étant soumis à la pression variable de l'enceinte air/huile, sous l'effet d'une différence de pression entre les deux compartiments, le piston étant apte à se déplacer en translation à l'intérieur de l'arbre entre deux positions extrêmes, une première position dans laquelle le ou les orifices de passage de l'air sont dégagés et une seconde position, différente de la première, dans laquelle le ou les orifices de passage de l'air sont partiellement obstrués par le piston.

En pratique, la section de passage de l'air traversant le ou les orifices de l'arbre du déshuileur est fonction de la différence de pression entre la pression à l'intérieur de l'enceinte air/huile et la pression ambiante correspondant à la mise à l'air libre de l'arbre. Aussi, plus le débit d'air traversant les joints d'étanchéité de l'enceinte air/huile sera élevé, plus la pression à l'intérieur de l'enceinte sera importante et plus la section de passage de l'air empruntant le déshuileur pourra être réduite (par déplacement du piston vers sa seconde position).

De la sorte, il est possible de faire varier la section de passage de l'air dans le déshuileur en fonction de la pression à l'intérieur de l'enceinte air/huile, et ainsi de limiter le débit d'air traversant les joints d'étanchéité au strict nécessaire pour assurer l'étanchéité de l'enceinte. Il en résulte une faible consommation d'huile durant toutes les phases de fonctionnement du moteur.

Selon une disposition avantageuse de l'invention, le piston comporte un arbre centré sur l'axe de révolution et apte à coulisser à l'intérieur de bagues fixes afin d'assurer un guidage axial du piston. Dans ce cas, l'une au moins des bagues forme avantageusement une butée axiale amont pour le piston.

Selon une autre disposition avantageuse de l'invention, le déshuileur comporte en outre un épaulement annulaire qui est solidaire de l'arbre et qui forme une butée axiale aval pour le piston.

Selon encore une autre disposition avantageuse de l'invention, le déshuileur comporte en outre un ressort enroulé autour de l'arbre pour maintenir le piston dans sa première position en cas de trop faible pressurisation de l'enceinte air/huile.

Chaque orifice de passage de l'air peut déboucher dans l'enceinte air/huile par l'intermédiaire d'une cheminée s'étendant selon une direction sensiblement radiale.

L'invention a également pour objet un moteur d'avion à turbine à gaz comportant au moins un déshuileur centrifuge tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue montrant un déshuileur centrifuge conforme à l'invention dans un exemple d'environnement ;
- la figure 2 est une vue en coupe longitudinale du déshuileur de la figure 1 dans l'une des ses deux positions extrêmes ; et
- la figure 3 est une vue en coupe longitudinale du déshuileur de la figure 1 dans l'autre des ses deux positions extrêmes.

### Description détaillée d'un mode de réalisation

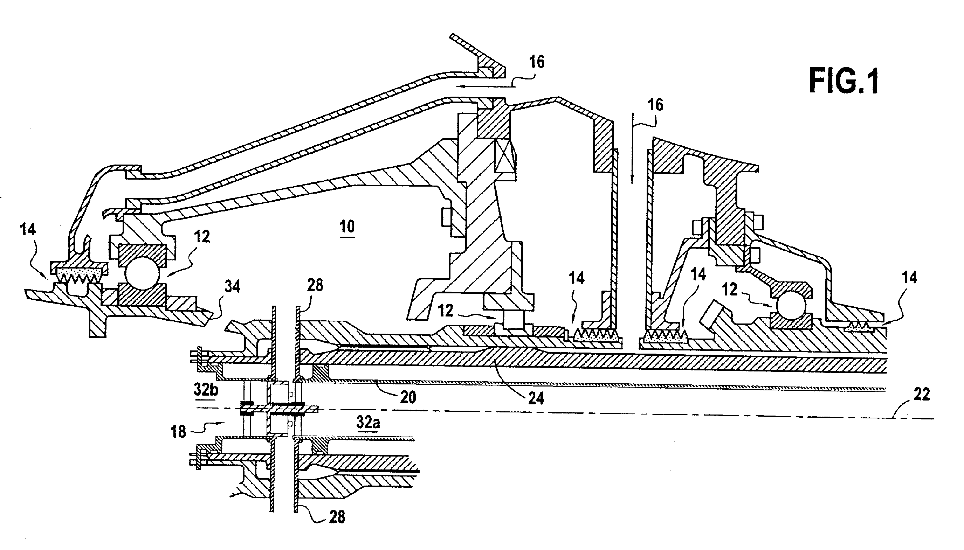

La figure 1 représente, en coupe longitudinale, une enceinte air/huile 10 d'un turboréacteur munie d'un déshuileur centrifuge conforme à l'invention. Bien entendu, la présente invention s'applique à d'autres types d'enceintes air/huile présentes dans un moteur à turbine à gaz, par exemple à celles présentes dans le boîtier d'entraînement d'accessoires d'un turboréacteur.

L'enceinte air/huile 10 renferme notamment des paliers à roulement 12 qui nécessitent d'être refroidis et lubrifiés en injectant de l'huile en continu entre les bagues des roulements de ces paliers par l'intermédiaire de buses d'injection (non représentées sur la figure). Dans le cas d'un boîtier d'entraînement d'accessoires, outre les roulements, ce sont également les engrenages qui ont besoin d'être refroidis et lubrifiés par injection d'huile.

Afin d'éviter les fuites d'huile vers l'extérieur de l'enceinte air/huile 10, il est prévu de disposer des joints d'étanchéité 14 entre les parties tournantes et les parties fixes de l'enceinte. Sur l'exemple de la figure 1, ces joints sont au nombre de quatre et sont du type à labyrinthe.

Un débit d'air comprimé est introduit dans l'enceinte air/huile 10 au travers des joints 14 pour pressuriser l'enceinte et ainsi assurer une parfaite étanchéité de celle-ci. Ce débit d'air provient par exemple d'un prélèvement sur un étage d'un compresseur du turboréacteur (schématisé par les flèches 16 sur la figure 1).

L'enceinte air/huile 10 comporte en outre un déshuileur centrifuge 18 conforme à l'invention. De façon connue en soi, un tel dispositif permet de séparer l'huile de l'air du mélange air/huile présent à l'intérieur de l'enceinte 10, l'air étant évacué à l'extérieur du turboréacteur et l'huile étant réinjectée à l'intérieur de l'enceinte.

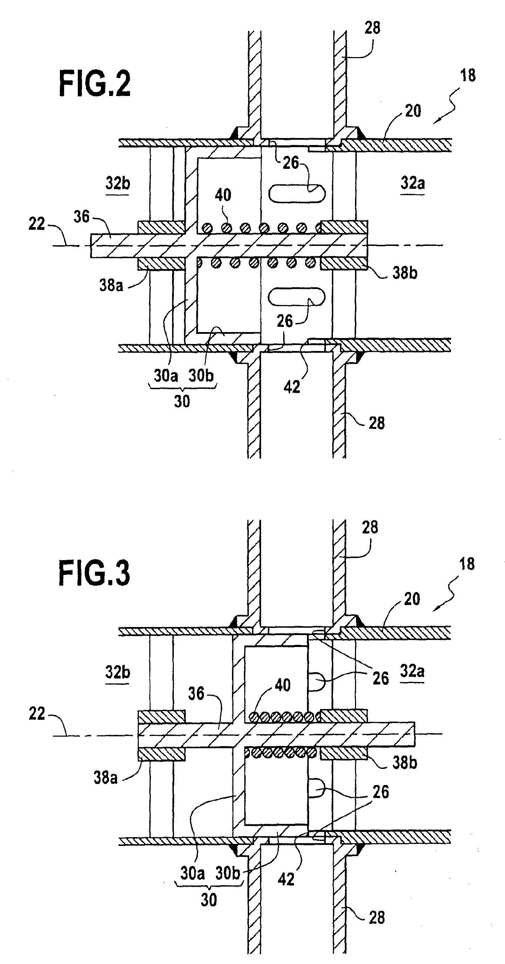

Comme représenté sur les figures 2 et 3, le déshuileur 18 comporte un arbre cylindrique creux 20 qui est mobile en rotation autour de son axe de révolution 22. L'arbre est par exemple entraîné en rotation directement par l'arbre principal 24 du turboréacteur (voir figure 1).

L'arbre creux 20 comporte une pluralité d'orifices de passage de l'air 26 qui débouchent dans l'enceinte air/huile 10 et s'ouvrent à l'intérieur de l'arbre creux. Comme représenté sur la figure 2, ces orifices 26 sont par exemple de forme oblongue et régulièrement répartis autour de l'axe 22.

Dans l'exemple de réalisation des figures 1 à 3, le déshuileur centrifuge est du type à cheminées, c'est-à-dire que les orifices de passage de l'air 26 débouchent chacun dans l'enceinte air/huile 10 par l'intermédiaire d'une cheminée 28 s'étendant selon une direction sensiblement radiale. D'autres types de déshuileurs sont cependant envisageables (déshuileur à nid d'abeille, à mousse métallique, etc.).

Avec ce déshuileur, le principe de séparation de l'huile de l'air est le suivant : l'enceinte air/huile 10 étant en surpression par rapport à l'intérieur de l'arbre, le mélange air/huile présent dans l'enceinte pénètre dans les cheminées radiales 28 du déshuileur. Les gouttelettes d'huile en suspension dans ce mélange vont être « captées » par les parois internes des cheminées. L'arbre 20 - et donc les cheminées 28 - du déshuileur étant en rotation, l'huile captée par les parois internes des cheminées va s'écouler radialement vers l'extérieur sous l'effet de la force centrifuge et retourner ainsi dans l'enceinte air/huile 10. En parallèle, l'air déshuilé va emprunter les orifices de passage de l'air 26 et s'écouler à l'intérieur de l'arbre vers l'aval de celui-ci pour être évacué à l'extérieur du turboréacteur.

Toujours selon l'invention, un piston 30 est logé dans l'arbre creux 20 du déshuileur. Ce piston comporte notamment un disque 30a qui est centré sur l'axe de révolution 22 et qui se prolonge à sa périphérie par une collerette annulaire 30b.

Le piston 30 du déshuileur divise transversalement l'intérieur de l'arbre en deux compartiments étanches l'un par rapport à l'autre : un compartiment aval 32a qui comporte les orifices de passage de l'air 26 et un compartiment amont 32b.

Le compartiment aval 32a communique directement avec l'extérieur du turboréacteur (à l'extrémité aval non représentée de l'arbre principal 24 du turboréacteur). Il est donc soumis à la pression ambiante extérieure P1 qui est sensiblement constante (à iso altitude).

Quant au compartiment amont 32b, il est mis en communication avec l'enceinte air/huile 10 par l'intermédiaire d'un ou plusieurs perçages 34 (voir figure 1). Il est donc soumis à la pression P2 régnant à l'intérieur de l'enceinte air/huile, cette pression étant variable selon le débit d'air entrant dans l'enceinte par les joints d'étanchéité 14.

En fonction de la différence de pression entre les deux compartiments 32a, 32b, le piston 30 du déshuileur 18 est apte à se déplacer en translation à l'intérieur de l'arbre creux 20.

A cet effet, le piston 30 comporte un arbre 36 centré sur l'axe 22, solidaire du disque 30a et pouvant coulisser à l'intérieur de deux bagues fixes - une bague amont 38a et une bague aval 38b - qui permettent d'assurer un guidage axial du piston.

Le piston 30 du déshuileur peut se déplacer en translation entre deux positions extrêmes : une première position représentée sur la figure 2 dans laquelle les orifices de passage de l'air 26 sont entièrement dégagés (piston déplacé vers l'amont) et une seconde position représentée sur la figure 3, différente de la première, dans laquelle les orifices de passage sont partiellement obstrués par sa collerette 30b (piston déplacé vers l'aval).

Le piston 30 du déshuileur se déplace sous l'effet d'une différence de pression entre les deux compartiments 32a, 32b. Plus précisément, la pression ambiante P1 à l'intérieur du compartiment aval 32a étant sensiblement constante (à iso altitude), le piston se déplace selon le niveau de pression P2 régnant à l'intérieur de l'enceinte air/huile 10.

Selon une disposition avantageuse, la première position du piston 30 du déshuileur (figure 2) est définie par la bague amont 38a qui forme une butée axiale amont pour le piston.

Par ailleurs, un ressort 40 travaillant en compression est enroulé autour de l'arbre 36 du piston et prend appui à ses extrémités sur le disque 30a du piston et sur la bague aval 38b. Ce ressort permet de maintenir le piston dans sa première position extrême en cas de trop faible pression à l'intérieur de l'enceinte air/huile et ainsi garantir dans cette situation une section de passage de l'air suffisamment importante pour assurer l'étanchéité de l'enceinte air/huile au niveau des joints 14.

Selon une autre disposition avantageuse, la seconde position du piston 30 du déshuileur (figure 3) est définie par un épaulement annulaire 42 qui forme une butée axiale aval pour le piston. Cet épaulement qui est solidaire de l'arbre 20 du déshuileur forme une diminution du diamètre de l'arbre, empêchant ainsi tout coulissement du piston au-delà de celui-ci.

Ainsi, lorsque la pression P2 à l'intérieur de l'enceinte air/huile 10 devient supérieure à une pression de seuil prédéterminée, le piston est maintenu dans sa seconde position pour laquelle les orifices de passage de l'air 26 sont partiellement obstrués. De la sorte, une section de passage minimale pour l'air est garantie quelle que soit la pression régnant à l'intérieur de l'enceinte air/huile.

De même, lorsque la pression P2 à l'intérieur de l'enceinte air/huile 10 est insuffisante pour maintenir le piston 30 contre la butée aval 42, celui-ci, sous l'effet du ressort 40, revient en butée contre la bague amont 38a laissant ainsi les orifices de passage de l'air 26 complètement ouverts.

Le fonctionnement du déshuileur selon l'invention découle de manière évidente de ce qui précède. Plus le débit d'air traversant les joints d'étanchéité 14 de l'enceinte air/huile 10 sera élevé, plus la pression P2 à l'intérieur de l'enceinte sera importante et plus la section de passage de l'air empruntant le déshuileur 18 pourra être réduite (par déplacement du piston 30 vers sa seconde position). Inversement, à faible régime de fonctionnement du turboréacteur, la pression P2 régnant à l'intérieur de l'enceinte air/huile sera trop faible pour déplacer le piston 30 (maintenu dans sa première position par le ressort 40) et la section de passage de l'air empruntant le déshuileur 18 sera maximale pour assurer l'étanchéité de l'enceinte air/huile au niveau des joints 14.

Comme indiqué précédemment, le déshuileur peut présenter des variantes de réalisation non représentées sur les figures. Ainsi, les cheminées radiales 28 décrites précédemment pourraient être remplies par une structure en nid d'abeille ou une mousse métallique dont les alvéoles servent à recueillir les gouttelettes d'huile en suspension dans le mélange air/huile.

## Revendications

1. Déshuileur centrifuge à section de passage variable, comportant :
un arbre cylindrique creux (20) mobile en rotation autour de son axe de révolution (22), l'arbre ayant au moins un orifice de passage de l'air (26) débouchant dans une enceinte air/huile (10) et s'ouvrant à l'intérieur de l'arbre ; **caractérisé en ce que** le déshuileur comporte en outre
un piston (30) logé dans l'arbre de façon à diviser l'intérieur de l'arbre en deux compartiments étanches l'un par rapport à l'autre, un compartiment aval (32a) pourvu du ou des orifices de passage de l'air étant soumis à la pression ambiante extérieure et un compartiment amont (32b) étant soumis à la pression variable de l'enceinte air/huile ;
sous l'effet d'une différence de pression entre les deux compartiments, le piston étant apte à se déplacer en translation à l'intérieur de l'arbre entre deux positions extrêmes, une première position dans laquelle le ou les orifices de passage de l'air sont dégagés et une seconde position, différente de la première, dans laquelle le ou les orifices de passage de l'air sont partiellement obstrués par le piston.

2. Déshuileur selon la revendication 1, **caractérisé en ce que** le piston (30) comporte un arbre (36) centré sur l'axe de révolution (22) et apte à coulisser à l'intérieur de deux bagues fixes amont et aval (38a, 38b) afin d'assurer un guidage du piston.

3. Déshuileur selon la revendication 2, c**caractérisé en ce que** la bague amont (38a) forme une butée axiale amont pour le piston (30); définissant la première position du piston

4. Déshuileur selon l'une quelconque des revendications 1 à 3, **caractérisé en ce qu'**il comporte en outre un épaulement annulaire (42) qui est solidaire de outre un épaulement annulaire (42) qui est solidaire de l'arbre (20) et qui forme une butée axiale aval pour le piston, définissant la seconde position du piston.

5. Déshuileur selon l'une quelconque des revendications 2 à 4, **caractérisé en ce qu'**il comporte en outre un ressort (40) enroulé autour de l'arbre (36) pour maintenir le piston (30) dans sa première position en cas de trop faible pressurisation de l'enceinte air/huile (10).

6. Déshuileur selon l'une quelconque des revendications 1 à 5, **caractérisé en ce que** chaque orifice de passage de l'air (26) débouche dans l'enceinte air/huile (10) par l'intermédiaire d'une cheminée (28) s'étendant selon une direction sensiblement radiale.

7. Moteur d'avion à turbine à gaz **caractérisé en ce qu'**il comporte au moins un déshuileur centrifuge (18) selon l'une quelconque des revendications 1 à 6.

## Claims

1. A centrifugal de-oiler of variable flow section, the de-oiler comprising:
a hollow cylindrical shaft (20) movable in rotation about its axis of revolution (22), the shaft having at least one air-passing orifice (26) opening out into an air/oil enclosure (10) and opening out into the inside of the shaft; **characterised in that** the de-oiler further comprises
a piston (30) housed inside the shaft so as to subdivide the inside of the shaft into two compartments that are sealed relative to each other, the compartment (32a) provided with the air-passing orifice(s) being subjected to ambient pressure and the other compartment (32b) being subjected to the varying pressure in the air/oil enclosure;
the piston being suitable for moving in translation inside the shaft between two extreme positions under the effect of a pressure difference between the two compartments, the extreme positions comprising a first position in which the air-passing orifice(s) is/are disengaged, and a second position, different from the first position, in which the air-passing orifice(s) is/are partially obstructed by the piston.

2. A de-oiler according to claim 1, **characterised in that** the piston (30) comprises a shaft (36) centered on the axis of revolution (22) and suitable for sliding inside two upstream and downstream stationary rings (38a, 38b) for the purpose of guiding the piston axially.

3. A de-oiler according to claim 2, **characterised in that** the upstream ring (38a) forms an upstream axial abutment for the piston (30) defining the first position of the piston.

4. A de-oiler according to any one of claims 1 to 3, **characterised in that** it includes an annular shoulder (42) secured to the shaft (20) and forming a downstream axial abutment for the piston defining the second position of the piston.

5. A de-oiler according to any one of claims 2 to 4, **characterised in that** it includes a spring (40) wound around the shaft (36) to keep the piston (30) in its first position when the pressure in the air/oil enclosure (10) is too low.

6. A de-oiler according to any one of claims 1 to 5, **characterised in that** each air-passing orifice (26) opens out into the air/oil enclosure (10) via a chimney (28) extending in a direction that is substantially radial.

7. A gas turbine airplane engine **characterised in that** it includes at least one centrifugal de-oiler (18) according to any one of claims 1 to 6.

## Patentansprüche

1. Zentrifugal-Ölabscheider mit veränderlichem Durchgangsquerschnitt, umfassend:
eine zylindrische Hohlwelle (20), die um ihre Rotationsachse (22) drehbeweglich ist, wobei die Welle wenigstens eine Luftdurchgangsöffnung (26) aufweist, die in einen Luft/Öl-Raum (10) mündet und sich in der Welle öffnet,
**dadurch gekennzeichnet, daß** der Ölabscheider ferner umfaßt
einen Kolben (30), der in der Welle derart aufgenommen ist, daß er den Innenraum der Welle in zwei zueinander dichte Abschnitte unterteilt, wobei ein stromabwärtiger Abschnitt (32a), der mit der oder den Luftdurchgangsöffnungen versehen ist, dem äußeren Umgebungsdruck ausgesetzt ist und ein stromaufwärtiger Abschnitt (32b) dem veränderlichen Druck des Luft/Öl-Raums ausgesetzt ist,
wobei unter der Wirkung einer Druckdifferenz zwischen den beiden Abschnitten der Kolben imstande ist, sich innerhalb der Welle zwischen zwei Endstellungen verschiebend zu bewegen, einer ersten Stellung, in der die Luftdurchgangsöffnung oder -öffnungen freigegeben sind, und einer von der ersten abweichenden zweiten Stellung, in der die Luftdurchgangsöffnung oder -öffnungen durch den Kolben teilweise versperrt sind.

2. Ölabscheider nach Anspruch 1, **dadurch gekennzeichnet, daß** der Kolben (30) eine Welle (36) umfaßt, die um die Rotationsachse (22) zentriert und geeignet ist, innerhalb von zwei vor- und nachgeordneten festen Ringen (38a, 38b) zu gleiten, um ein axiales Führen des Kolbens sicherzustellen.

3. Ölabscheider nach Anspruch 2, **dadurch gekennzeichnet, daß** der vorgeordnete Ring (38a) einen vorgeordneten Axialanschlag für den Kolben (30) bildet, der die erste Stellung des Kolbens definiert.

4. Ölabscheider nach einem der Ansprüche 1 bis 3, **dadurch gekennzeichnet, daß** er ferner eine ringförmige Schulter (42) aufweist, die mit der Welle (20) fest verbunden ist und die einen nachgeordneten Axialanschlag für den Kolben bildet, der die zweite Stellung des Kolbens definiert.

5. Ölabscheider nach einem der Ansprüche 2 bis 4, **dadurch gekennzeichnet, daß** er ferner eine um die Welle (36) gewickelte Feder (40) aufweist, um den Kolben (30) im Fall einer zu geringen Druckbeaufschlagung des Luft/Öl-Raums (10) in seiner ersten Stellung zu halten.

6. Ölabscheider nach einem der Ansprüche 1 bis 5, **dadurch gekennzeichnet, daß** jede Luftdurchgangsöffnung (26) über einen in einer im wesentlichen radialen Richtung verlaufenden Schacht (28) in den Luft/Öl-Raum (10) mündet.

7. Gasturbinenflugzeugtriebwerk, **dadurch gekennzeichnet, daß** es wenigstens einen Zentrifugal-Ölabscheider (18) nach einem der Ansprüche 1 bis 6 umfaßt.
